(19) Europäisches Patentamt
European Patent Office
Office européen des brevets

(11) **EP 2 481 146 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(21) Anmeldenummer: **10759596.9**

(22) Anmeldetag: **24.08.2010**

(51) Int Cl.:
**H02M 7/483** *(2007.01)*

(86) Internationale Anmeldenummer:
**PCT/EP2010/062305**

(87) Internationale Veröffentlichungsnummer:
**WO 2011/036011 (31.03.2011 Gazette 2011/13)**

(54) **VERFAHREN ZUM REGELN EINES UMRICHTERS UND ANORDNUNG ZUR REGELUNG EINES UMRICHTERS**

METHOD FOR CONTROLLING AN INVERTER AND ARRANGEMENT FOR CONTROLLING AN INVERTER

PROCÉDÉ ET DISPOSITIF DE RÉGLAGE D'UN CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **25.09.2009 DE 102009043598**

(43) Veröffentlichungstag der Anmeldung:
**01.08.2012 Patentblatt 2012/31**

(73) Patentinhaber: **Siemens Aktiengesellschaft 80333 München (DE)**

(72) Erfinder:
- **MÜNCH, Philipp**
  **67663 Kaiserslautern (DE)**
- **LIU, Steven**
  **67663 Kaiserslautern (DE)**

(56) Entgegenhaltungen:
**WO-A1-2008/067785    US-A1- 2004 054 440**

- YASSER ABDEL-RADY IBRAHIM MOHAMED ET AL: "Robust High Bandwidth Discrete-Time Predictive Current Control with Predictive Internal Model-A Unified Approach for Voltage-Source PWM Converters", IEEE TRANSACTIONS ON POWER ELECTRONICS, IEEE SERVICE CENTER, PISCATAWAY, NJ, US, Bd. 23, Nr. 1, 1. Januar 2008 (2008-01-01) , Seiten 126-136, XP011198581, ISSN: 0885-8993, DOI: DOI:10.1109/TPEL.2007.911797

- MAKOTO HAGIWARA ET AL: "A modular multilevel PWM inverter for medium-voltage motor drives", ENERGY CONVERSION CONGRESS AND EXPOSITION, 2009. ECCE. IEEE, IEEE, PISCATAWAY, NJ, USA, 20. September 2009 (2009-09-20), Seiten 2557-2564, XP031561057, ISBN: 978-1-4244-2893-9

- ANTONIOS ANTONOPOULOS ET AL: "On dynamics and voltage control of the Modular Multilevel Converter", POWER ELECTRONICS AND APPLICATIONS, 2009. EPE '09. 13TH EUROPEAN CONFERENCE ON, IEEE, PISCATAWAY, NJ, USA, 8. September 2009 (2009-09-08), Seiten 1-10, XP031541295, ISBN: 978-1-4244-4432-8

- ANDREJA RASIC ET AL: "Optimization of the modular multilevel converters performance using the second harmonic of the module current", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-10, XP031541462, ISBN: 978-1-4244-4432-8

- DE LEÓN MORALES J ET AL: "Observer for DC voltages in a cascaded H-bridge multilevel STATCOM", 20071101, vol. 1, no. 6, 1 November 2007 (2007-11-01), pages 879-889, XP006029740,

EP 2 481 146 B1

**Beschreibung**

Aus dem Beitrag von YASSER ABDEL-RADY IBRAHIM MOHAMED et al. mit dem Titel "Robust High Bandwidth Discrete-Time Predictive Current Control with Predictive Internal Model-A Unified Approach for Voltage-Source PWM Converters" in IEEE TRANSAC-TIONS ON POWER ELETRONICS, IEEE SERVICE CENTER, PISCATAWAY, NJ, US, Band 23, Nr. 1 vom 1. Januar 2008 auf den Seiten 126-136 ist Regelungsverfahren für einen zweistufigen spannungseinprägenden Umrichter beschrieben, bei dem Zeitverzögerungen bei der Regelung mit Hilfe von Unsicherheitsabschätzvektoren berücksichtigt werden.

Die WO 2008/067785 A1 offenbart ein Regelungsverfahren für einen so genannten modularen Mehrstufenumrichter, der eine Reihenschaltung von Submodulen aufweist, die jeweils mit einem unipolaren Kondensator ausgerüstet sind. Bei der Regelung wird die an dem Kondensator abfallende Spannung berücksichtigt. Darüber hinaus wird vorgeschlagen, ausreichend große Induktivitäten vorzusehen, mit deren Hilfe es möglich ist, Kreisströme im Umrichter zu regeln.

In dem Beitrag von MAKOTO HAGIWARA et al. mit dem Titel "A modular multilevel PWM inverter for medium-voltage motor drives" erschienen in ENERGY CONVERSION CONGRESS AND EXPOSI-TION, 2009, ECCE, IEEE, IEEE, PISCATAWAY, JF, USA am 20. September 2009 auf den Seiten 2557-2564 ist ebenfalls ein Regelungsverfahren für einen modularen Multilevelumrichter beschrieben. Dies trifft ebenso für die US 2004/054440 A1 zu.

Aus der WO 2008/067784 A1 ist ein Verfahren zum Regeln eines steuerbare Leistungshalbleiter aufweisenden Umrichters bekannt. Das Verfahren ist zum Regeln eines mehrstufigen Umrichters für die Hochspannungsgleichstromübertragung vorgesehen, wobei der Umrichter ein selbstgeführter Umrichter mit abschaltbaren Leistungshalbleitern ist. So besteht der Umrichter aus einer Brückenschaltung von Leistungshalbleiterventilzweigen, wobei jeder Leistungshalbleiterventilzweig eine Reihenschaltung von bipolaren Submodulen aufweist. Jedes Submodul verfügt wiederum über eine Leistungshalbleiterschaltung, die so mit einem Kondensator verschaltet ist, dass entweder die an dem Kondensator abfallende Spannung oder aber eine Nullspannung an den Ausgangsklemmen eines jeden Submoduls erzeugbar ist. Durch die Reihenschaltung der Submodule kann die an dem Leistungshalbleiterventil abfallende Spannung stufenweise eingestellt werden, wobei die Höhe einer Stufe der an der Kondensatoreinheit eines Submoduls abfallenden Spannung entspricht. Ein solcher Umrichter wird auch als Modular Multilevel Converter bezeichnet.

Bei diesem bekannten Umrichter oder bei anderen bekannten selbstgeführten Umrichtern ist nicht nur eine Stromregelung vorzunehmen, sondern auch eine Energieregelung und eine Balancierung durchzuführen, wozu eine kaskadierte Regelungsstruktur vorgesehen wird, also ein Gesamtregelkreis mit einer Kaskadenstruktur gebildet wird.

Weiterer relevanter Stand der Technik für die vorliegende Erfindung ist:

- DE LEON MORALES J ET AL: "Observer for DC voltages in a cascaded H-bridge multilevel STATCOM", 20071101, Bd. 1, Nr. 6, 1. November 2007 (2007-11-01), Seiten 879-889.
- US 2004/054440 A1 (ZHANG WENNONG [JP] ET AL) 18. März 2004 (2004-03-18)
- ANDREJA RASIC ET AL: "Optimization of the modular multilevel converters performance using the second harmonic of the module current", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10.
- ANTONIOS ANTONOPOULOS ET AL: "On dynamics and voltage control of the Modular Multilevel Converter", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-10

Der Erfindung liegt die Aufgabe zugrunde, ein Verfahren zur Regelung eines Umrichters vorzuschlagen, das sich durch eine klare Regelungsstruktur auszeichnet und eine schnelle Regelung bei guter Stabilität ermöglicht.

Zur Lösung dieser Aufgabe dient erfindungsgemäß ein Verfahren zum Regeln eines steuerbare Leistungshalbleiter aufweisenden Umrichters, bei dem Zustands-Stromwerte und Zustands-Zwischenkreisenergiewerte in einem den Zustand des Umrichters beschreibenden Zustandsvektor und Stromsollwerte und Zwischenkreisenergiesollwerte in einem Sollvektor zusammen gefasst werden; der Zustandsvektor und der Sollvektor werden unter Gewinnung von Regeldifferenzwerten verglichen, und die Regeldifferenzwerte werden einer Regelungseinheit zugeführt, die an ihrem Ausgang derartige Stellspannungswerte erzeugt, dass die Regeldifferenzwerte möglichst klein werden; außerdem werden von einer Steuerelektronik in Abhängigkeit der Stellspannungswerte Steuersignale bereitstellt und an die Leistungshalbleiter des Umrichters übertragen, wobei die Zustands-Stromwerte von einer Beobachtungseinheit ausgehend von den Stellspannungswerten aus gemessenen Stromwerten berechnet werden, wobei die Beobachtungseinheit den Umrichter modelliert und Verzögerungseffekte berücksichtigt, so dass die Zustands-Stromwerte den von Verzögerungseffekten befreiten unverzögerten, gemessenen Stromwerten entsprechen; die Zustands-Zwischenkreisenergiewerte werden mittels einer auf ein Signalmodell der Zwischenkreisenergiewerte zurück greifenden Schätzereinheit aus gemessenen Zwischenkreisenergiewerten ermittelt, wobei die Schätzereinheit die Parameter des Signalmodells der Zwischenkreisenergiewerte unter Ermittlung jeweils einer Zustands-Zwischenkreisenergiewerte der positiv-seitigen und die negativ-seitigen Drehspannungsquelle des Umrichters darstellenden Gleichgröße errechnet, und die Zustands-Zwischenkreisenergiewerte werden zusätzlich zu den Zustands-Stromwerten der Regelungseinheit zugeführt.

Es ist zwar Gegenstand einer älteren deutschen Patentanmeldung mit dem amtlichen Aktenzeichen 10 2009 019 298.0 ein Verfahren zum Regeln eines Umrichters, bei dem mittels einer Beobachtungseinheit Zustands-Stromwerte verzögerungseffektfrei erzeugt und einer Regelungseinheit zugeführt werden, was zu einer schnellen Regelung unter Heranziehung von Stromwerten führt, jedoch geht die vorliegende Erfindung darüber hinaus, indem sie eine Mehrgrößenregelung vorschlägt, bei der eine Regelung des Umrichters unter zusätzlicher Heranziehung der Zwischenkreisenergiewerte durchgeführt wird.

Erfindungsgemäß ist also zum einen eine Beobachtungseinheit bereitgestellt, die den zu regelnden Umrichter modelliert. Der Umrichter wird mit anderen Worten in ein mathematisches Modell überführt, das Verzögerungseffekte, die durch die Regelelektronik und bei der Messwerteerfassung entstehen, berücksichtigt. Der Zustand des Umrichters wird hierbei durch die Strom-Regelgrößen, also beispielsweise die Netz-, Gleich- und Kreisströme, beschrieben, wobei die Strom-Regelgrößen in einem Zustands-Stromvektor $\hat{\underline{x}}(k)$ zusammengefasst sind. Entsprechendes gilt für die Soll-Stromgrößen, die ebenfalls in einem Soll-Stromvektor $\underline{x}_{Soll}$ zusammengefasst werden. Ausgehend von den eingangsseitig zur Verfügung gestellten Stellspannungswerten modelliert die Beobachtungseinheit den Umrichter. Insbesondere wird das dynamische Verhalten des Umrichters mathematisch nachgebildet, wobei zweckmäßige Matrizen hergeleitet werden, die auf den Zustands-Stromvektor angewandt werden.

Erfindungsgemäß ist zum anderen eine Schätzereinheit vorhanden, mit der Zustands-Zwischenkreisenergiewerte in form von Gleichgrößen mittels eines Signalmodells der Zwischenkreisenergiewerte ermittelt werden; die errechneten Zustands-Zwischenkreisenergiewerte werden zu einem Zustands-Zwischenkreisenergievektor zusammen gefasst und zusätzlich zu dem Zustands-Stromvektor der Regelungseinheit zugeführt. Entsprechendes gilt hinsichtlich von Soll-Zwischenkreisenergiewerte; diese werden nämlich auch zu einem Soll-Zwischenkreisenergievektor zusammen gefasst.

Ausgangsseitig der Beobachtungseinheit wird ein Satz von Zustands-Stromwerten $\hat{\underline{x}}(k)$ bereitgestellt, wobei die Zustands-Stromwerte $\hat{\underline{x}}(k)$ Zustands-Strommesswerten entsprechen, die frei von Verzögerungseffekten sind. Die Zustands-Stromwerte $\hat{\underline{x}}(k)$ entsprechen mit anderen Worten unverzögerten Stromesswerten des Umrichters und werden der Regelung zugeführt. Erfindungsgemäß sind daher hinsichtlich der Strom-Regelgrößen die Voraussetzungen für eine schnelle Regelung geschaffen, ohne dass diesbezüglich Instabilitäten zu befürchten sind.

Am Ausgang der Schätzereinheit stehen Zustands-Zwischenkreisenergien an, die aufgrund ihrer Bildung mittels Schätzung ebenfalls schnell generiert sind, so dass auch von den Zwischenkreisenergie-Regelgrößen kein langsames Regelverhalten verursacht wird.

Auf diese Weise lässt sich mit dem erfindungsgemäßen Verfahren die Regelung des Umrichters auf der Basis einer ganzheitlichen Betrachtung mit gleichzeitiger Berücksichtigung aller regelungsrelevanter Regelgrößen unter Erzielung eines optimalen Regelverhaltens durchführen, wozu insbesondere auch eine schnell ablaufende Regelung gehört.

Bei dem erfindungsgemäßen Verfahren werden in vorteilhafter Weise die Zustands-Zwischenkreisenergiewerte der Leistungshalbleiterventilzweige der positiv-seitigen und der negativ-seitigen Drehspannungsquelle des Umrichters jeweils für sich erfasst; mittels jeweils eines Parameter-Schätzers der Schätzereinheit werden die Parameter des Signalmodells der Zwischenenergiewerte errechnet, und es werden die jeweils einen Gleichanteil beschreibenden Parameter der positiv-seitigen und der negativen Leistungshalbleiterventilzweige jeweils für sich unter Bildung der Zustands-Zwischenkreisenergiewerte addiert.

Bevorzug werden Parameter-Schätzer mit rekursivem Algorithmus verwendet. Zu derartigen Algorithmen gehören der rekursive Least-Square-Altorithmus, der rekursive erweiterte Least-Square-Algorithmus, die rekursive Methode der Hilfsvariablen (instrumental variables), die rekursive Predictionerror-Methode und die rekursive Maximum-Likelihood-Methode bzw. Algorithmus.

Als vorteilhaft wird es ferner angesehen, wenn zur Ermittlung des Gleichanteils der Zwischenkreisenergiewerte als Schätzer Parameter-Schätzer mit einem Schwingungsmodell $w(t)$ für die Zwischenkreisenergiewerte

$$w(t) = A_0 + A_{k1} * \cos(k\omega t) + A_{k2} * \sin(k\omega t) \quad \text{für} \quad k=1 \text{ bis } n$$

verwendet wird,
in dem $A_0$ den Gleichanteil der Zwischenkreisenergiewerte und $A_{k1}$ und $A_{k2}$ weitere Parameter des Schwindungsmodells sowie $\omega$ die Kreisfrequenz eines mit dem Umrichter verbundenen Wechselspannungsnetzes angibt.

Der wesentliche Vorteil dieser Ausgestaltung des erfindungsgemäßen Verfahrens besteht darin, dass bei ihm der Gleichanteil der Zwischenkreisenergiewerte infolge des Einsatzes des Least-Square-Schätzers schnell ermittelt kann, was zu einem guten Regelverhalten des Umrichters insgesamt führt. Zur Regelung der Zwischenkreisenergie und zum Balancieren der Zweige des Umrichters ist nämlich der Gleichanteil erforderlich. Wird dieser Gleichanteil exakt und schnell bestimmt, dann ist dadurch auch das Regelverhalten des Umrichters insgesamt gut. Erfolgt die Regelung des Umrichters digital, was bevorzugt wird, dann lässt sich erfindungsgemäß erreichen, dass der Gleichanteil jeweils zum aktuellen Abtastzeitpunkt vorliegt oder sogar für den folgenden Abtastpunkt bereits vorausgeschätzt vorliegt.

Besonders schnell lässt sich der Gleichanteil der Zwischenkreisenergiewerte ermitteln, wenn als Schätzer ein Parameter-Schätzer mit einem Schwingungsmodell $w(t)$ für die Zwischenkreisenergiewerte

$$w(t) = A_0 + A_{11}*\cos(\omega t) + A_{12}*\sin(\omega t) + A_{21}*\cos(2\omega t) + A_{22}*\sin(2\omega t)$$

verwendet wird,
in dem $A_0$ den Gleichanteil der Zwischenkreisenergiewerte und $A_{11}$ bis $A_{22}$ weitere Parameter des Schwindungsmodells sowie $\omega$ die Kreisfrequenz eines mit dem Umrichter verbundenen Wechselspannungsnetzes angibt.

Bei dem erfindungsgemäßen Verfahren kann mit Parametern unterschiedlicher Art geschätzt werden. Dabei ist es zur Erzielung einer hohen Genauigkeit vorteilhaft, wenn ein Schwingungsmodell mit zeitabhängigen Parametern $A_0(t)$ bis $A_{22}(t)$ verwendet wird.

Zur Erzielung einer relativ einfach durchführbaren Schätzung ist es ferner vorteilhaft, wenn die Zeitabhängigkeit der Parameter durch eine lineare Funktion oder eine Exponentialfunktion vorgegeben wird.

Besonders einfach, jedoch ggf. unter Inkaufnahme einer größeren Ungenauigkeit lässt sich das erfindungsgemäße Verfahren mit einem Schwingungsmodell mit zeitlich konstanten Parametern $A_0$ bis $A_{22}$ durchführen. Stimmt das Modell gut mit dem wirklichen Signal überein, arbeitet das Verfahren auch mit dem einfachen Modell genau.

Im Rahmen der Erfindung können die Zustandsgrößen neben reinen Stromwerten auch Spannungen, insbesondere Stellspannungen, oder dergleichen oder andere Größen wie die Temperatur bestimmter Bauteile umfassen. Dabei entsprechen die Sollgrößen in jedem Fall den Zustands-Größen, da ein Vergleich, also die Differenzbildung zwischen diesen Größen, sonst nicht möglich wäre.

Vorteilhafterweise stellt die Beobachtungseinheit neben den unverzögerten Zustands-Stromwerten $\hat{\underline{x}}(k)$ verzögerte Modellausgangswerte $\hat{\underline{y}}_d(k)$ bereit, die am Eingang der Beobachtungseinheit erfassten Ausgangsmesswerte $\underline{y}_d(k)$ entsprechen, wobei die Modellausgangswerte $\hat{\underline{y}}_d(k)$ mit den erfassten Ausgangsmesswerten $\underline{y}_d(k)$ unter Gewinnung einer Modellausgangsabweichungsdifferenz verglichen werden, die Modellausgangsabweichungsdifferenz der Beobachtungseinheit eingangsseitig zugeführt und die Modellausgangsabweichungsdifferenz möglichst klein ist. Gemäß dieser Weiterentwicklung erfolgt die Modellierung des Umrichters mit einer Rückkopplung, wobei ausgenutzt wird, dass das gewählte mathematische Modell des Umrichters nicht nur die unverzögerten Zustands-Stromwerte $\hat{\underline{x}}(k)$ liefert, sondern auch die mit Verzögerungseffekten behafteten Modellausgangswerte. Die Modellausgangswerte entsprechen daher den durch reale Messungen erhältlichen Ausgangsmesswerten. Ein Vergleich der Ausgangsmesswerte mit den Modellausgangswerten, also mit anderen Worten die Bildung der Modellausgangsabweichungsdifferenz zwischen diesen beiden Größen, gibt daher Aufschluss über die Güte der Modellierung. Die Modellausgangsabweichungsdifferenz wird der Beobachtungseinheit als zweite Eingangsgröße zugeführt. Durch ihre Minimierung wird daher das Regelungsverfahren hinsichtlich der Stromregelung verbessert. Im Idealfall ist die Modellausgangsabweichungsdifferenz gleich null.

Zur diesbezüglich zweckmäßigen Weiterentwicklung wird die Modellausgangsabweichungsdifferenz der Beobachtungseinheit bzw. kurz der Beobachtungsfehler über eine Rückführungseinheit zugeführt, welche die Modellausgangsabweichungsdifferenz zweckmäßig verstärkt. Wird der Zustand des Umrichters über einen Zustands-Stromvektor $\underline{x}(k)$, beispielsweise einem aus fünf Strömen des Umrichters bestehenden Vektor, beschrieben, ergibt sich auch ein Vektor für die Modellausgangsabweichungsdifferenz. In diesem Fall wendet die Rückführungseinheit eine aus Konstanten bestehende Matrix auf den Vektor der Modellabweichungsdifferenz an. Mit anderen Worten wird die Modellabweichungsdifferenz durch diese Matrix in einer Weise verstärkt, die für die weitere Modellierung des Umrichters unter Minimierung der Modellabweichungsdifferenz zweckmäßig ist.

Bei einer bevorzugten Variante des erfindungsgemäßen Verfahrens umfasst die Berücksichtigung von Verzögerungseffekten das Berücksichtigen von Messverzögerungen, die bei der Messung bzw. digitalen Erfassung der elektrischen Ströme des Umrichters entstehen, und die Berücksichtigung von Stellverzögerungen, die von der Steuerelektronik verursacht werden. Das bei der Erfassung der Ausgangsmesswerte des Umrichters gewonnene Messsignal wird in Abtastschritten k unter Gewinnung von Abtastwerten fortlaufend abgetastet. Die Abtastwerte werden anschließend digitalisiert und zur Beobachtungseinheit übertragen. Die Modellierung der sich dabei einstellenden Messverzögerung erfolgt zweckmäßigerweise unter der Annahme, dass die Messverzögerung eine Zeitdauer von vier Abtastschritten entspricht. Es hat sich gezeigt, dass eine solche Annahme für einen selbstgeführten mehrstufigen Umrichter für die Hochspannungsgleichstromübertragung zweckmäßig ist.

Gemäß einer weiteren Ausgestaltung der Erfindung wird die Stellverzögerung $\tau$

$$\tau = (l-1)T + \tau'$$

modelliert, wobei $l$ der Anzahl der Abtastschritte entspricht, deren Summe kleiner ist als die Stellverzögerung $\tau$. $\tau'$ wird als Restanteil bezeichnet und ist in jedem Falle kürzer als die Zeitdauer zwischen zwei Abtastschritten T. Bei dieser Modellierung der Stellverzögerung hat sich eine Größe von $l$=1 oder $l$=2 als zweckmäßig je nach konkreter Ausführung eines mehrstufigen selbstgeführten Umrichters erwiesen.

Zweckmäßigerweise wird der Umrichter mit Hilfe eines Zustandsraummodells gemäß

$$\hat{\underline{x}}'_{k+1} = \underline{\Phi}\hat{\underline{x}}'_k + \underline{\Gamma}\underline{u}_k$$

$$\hat{\underline{y}}_d = \underline{H}\hat{\underline{x}}'_k$$

modelliert, wobei $\hat{\underline{x}}'(k)$ einem Zustandsvektor des Umrichters einschließlich verzögerten Zuständen, $\underline{u}_k$ einem Vektor der Stellspannungen, $\underline{\Phi}$, $\underline{\Gamma}$ und $\underline{H}$ Modellmatrizen und $\hat{\underline{y}}_d$ einem Vektor von mit Verzögerungen behafteten Modellausgangswerten entsprechen. $k$ indiziert den jeweiligen Abtastschritt. Das gewählte Streckenmodell ist die diskrete Form einer zeitkontinuierlichen Differenzialgleichung und wird auch als Differenzengleichung bezeichnet. Dem gemäß berechnet sich der Zustand im Abtastschritt $k$+1 aus dem Zustand des Zustandsvektors x im Abtastschritt $k$ in Abhängigkeit der Stellspannungen $\underline{u}(k)$.

Bei einem mehrstufigen Umrichter mit Leistungshalbleiterventilzweigen, die jeweils aus einer Reihenschaltung von bipolaren Submodulen bestehen, wobei jedes Submodul eine Leistungshalbleiterschaltung sowie einen Kondensator aufweist, ist es ausreichend, den Zustand des Umrichters mit lediglich fünf Strömen zu beschreiben, da sich die anderen Ströme des Umrichters aus den fünf Zustandsgrößen berechnen lassen. Die an dem Umrichter auftretenden Ströme sind beispielsweise Netzströme, Gleichstrom sowie Kreisströme zwischen den Leistungshalbleiterventilzweigen des Umrichters. Um Verzögerungseffekte im Modell berücksichtigen zu können, wird der Zustandsvektor $\hat{\underline{x}}_k$ um die verzögerten Modellausgangswerte $\hat{\underline{y}}_d$ zu $\hat{\underline{x}}(k)$ erweitert.

Der Erfindung liegt auch die Aufgabe zugrunde, eine Anordnung zur Regelung eines Umrichters, wie er aus der eingangs behandelten internationalen Anmeldung hervorgeht, oder allgemein einen selbst geführten Umrichters so fort zu entwickeln, dass sie eine klare Regelungsstruktur aufweist und eine schnelle Regelung bei guter Stabilität der Regelung aufweist.

Zur Lösung dieser Aufgabe ist erfindungsgemäß bei einer Anordnung zur Regelung eines Umrichters mit einer Regelungseinheit die Regelungseinheit ausgangsseitig mit einem Eingang einer ein Modell des Umrichters darstellenden Beobachtungseinheit verbunden, die mit einem weiteren Eingang an den Ausgang des Umrichters angeschlossen ist; ferner ist an den Ausgang des Umrichters eine das Signalmodell von Zwischenkreisenergiewerten nachbildenden Schätzereinheit angeschlossen, und es sind die Beobachtungseinheit und die Schätzereinheit ausgangsseitig mit Ist-Eingängen der Regelungseinheit verbunden.

Vorteile dieser Anordnung sind vor allem eine gleichzeitige Berücksichtigung aller regelungsrelevanten Regelgrößen unter Erzielung eines optimalen Regelverhaltens mit schnell ablaufender Regelung.

Bei der erfindungsgemäßen Anordnung kann die Schätzereinheit in unterschiedlicher Weise ausgebildet sein. Als besonders vorteilhaft wird es angesehen, wenn bei einem Umrichter mit sechs Leistungshalbleiterventilzweigen die Schätzereinheit für jeden der drei positiv-seitigen Leistungshalbleiterventilzweige jeweils einen Schätzer und für jeden der drei negativ-seitigen Leistungshalbleiterventilzweige jeweils einen weiteren Schätzer aufweist.

Auch die Beobachtungseinheit kann in verschiedener Weise ausgeführt sein. Bevorzugt wird eine Beobachtungseinheit, die eine den Umrichter nachbildende Modelleinheit aufweist, die mit ihrem einen Eingang mit dem Ausgang der Regelungseinheit und mit ihrem anderen Eingang mit dem Ausgang einer Rückführungseinheit verbunden ist; die Rückführungseinheit ist mit dem Ausgang einer Summierschaltung verbunden, die mit ihrem einen Eingang an den Ausgang des Umrichters und mit ihrem weiteren Eingang an den Ausgang einer Ausschneideeinheit angeschlossen ist, wobei die Ausschneideeinheit mit dem Ausgang der Modelleinheit verbunden ist; außerdem ist der Ausgang der Modelleinheit über eine weitere Ausschneideeinheit mit dem Eingang der Regelungseinheit verbunden.

Die Erfindung und deren Vorteile werden nachfolgend anhand von Ausführungsbeispielen der Erfindung unter Bezug auf die Figuren der Zeichnung beschrieben, wobei gleiche Bezugzeichen auf gleiche Bauteile verweisen und wobei

Figuren 1 bis 3    eine schematische Darstellung eines beispielhaften Umrichters, der mit dem erfindungsgemäßen Verfahren geregelt wird,

Figur 4                      ein erstes Ausführungsbeispiel einer erfindungsgemäßen Anordnung zur Regelung eines Umrichters in form eines Blockschaltbildes,

Figur 5                      ein weiteres Ausführungsbeispiel der erfindungsgemäßen Anordnung und

Figur 6                      ein Ausführungsbeispiel der in den Figuren 4 und 5 dargestellten Schätzereinheit zeigen.

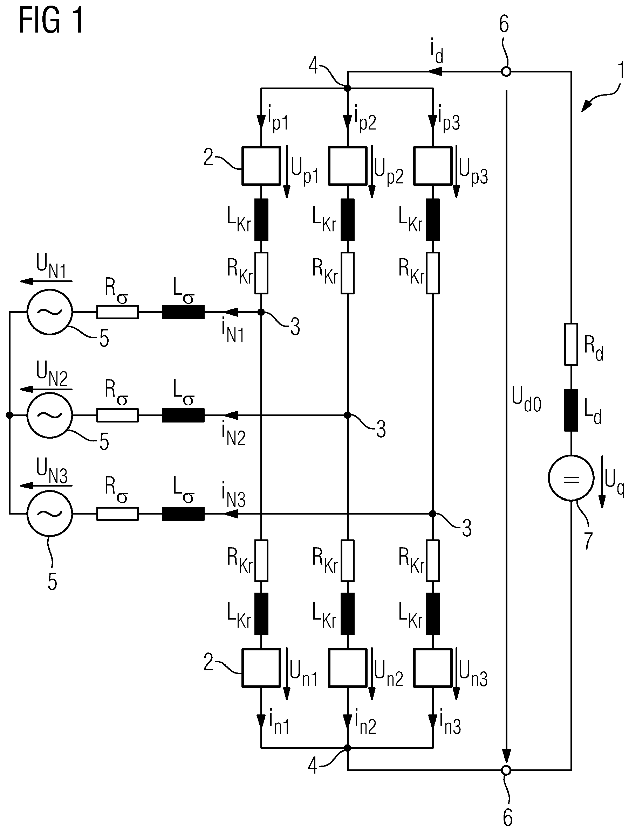

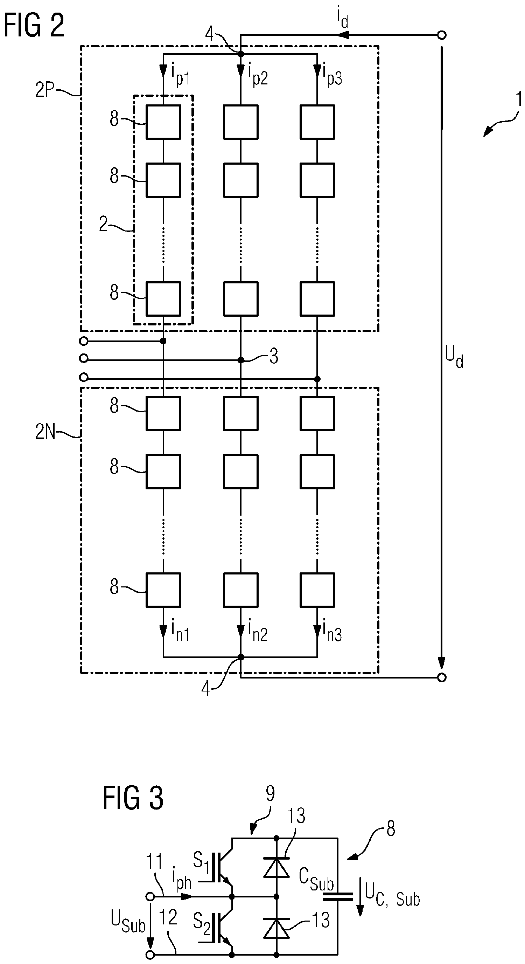

Figur 1 zeigt schematisch den Aufbau eines zu regelnden Umrichters 1, der zum Anschluss an ein in Figur 1 figürlich nicht dargestelltes Wechselstromnetz vorgesehen ist. Der Umrichter 1 verfügt über sechs Leistungshalbleiterventilzweige 2, die zu einer Sechs-Puls-Brückenschaltung miteinander verschaltet sind. Dabei erstreckt sich jeder Leistungshalbleiterventilzweig 2 zwischen einem Wechselspannungsanschluss 3 sowie einem Gleichspannungsanschluss 4. Jeder Wechselspannungsanschluss 3 ist mit einer Sekundärwicklung 5 eines figürlich nicht vollständig dargestellten Transformators verbunden, wobei die Sekundärwicklungen 5 zu einem Stern miteinander verschaltet sind. An den Sekundärwicklungen 5 fallen die Spannungen $u_{N1}$, $u_{N2}$ und $u_{N3}$ ab. Ein Ohmscher Widerstand $R_\sigma$ und eine Induktivität $L_\sigma$ symbolisieren Trafo- und Netzimpedanzen zwischen dem Wechselspannungsanschluss 3 und der Sekundärwicklung 5 in jeder Phase, wobei die Netzströme $i_{N1}$, $i_{N2}$ und $i_{N3}$ fließen. Ferner sind Induktivitäten $L_{Kr}$ zwischen jedem Wechselspannungsanschluss und dem dazugehörigen Ventilzweig 2 angeordnet; die Ohmschen Widerstände $R_{Kr}$ charakterisieren Ersatzwiderstände. Der durch die jeweiligen Leistungshalbleiterzweige 2 fließende Strom ist mit $i_{p1}$, $i_{p2}$, $i_{p3}$, $i_{N1}$, $i_{N2}$ und $i_{N3}$ bezeichnet. Deshalb sind nachfolgend die in der Fig. 1 oberen drei Leistungshalbleiterventilzweige als positiv-seitige Leistungshalbleiterventilzweige und die in dieser Figur unteren Leistungshalbleiterventilzweige als negativ-seitige Leistungshalbleiterventilzweige bezeichnet. Sie bilden jeweils eine positiv-seitige Drehspannungsquelle 2P und eine negativ-seitige Drehspannungsquelle 2N (siehe dazu auch Fig. 2). Die an den Leistungshalbleiterventilzweigen 2 insgesamt abfallende Spannung ist mit $u_{p1}$, $u_{p2}$, $u_{p3}$ sowie $u_{n1}$, $u_{n2}$ und $u_{n3}$. Die Gleichspannungsanschlüsse 4 sind Teil eines Gleichspannungskreises 6, in dem ein Gleichstrom $i_d$ fließt.

Der in Figur 1 oben dargestellte positive Pol des Gleichspannungskreises 6 ist mit dem unten dargestellten negativen Pol über einen Ohmschen Widerstand $R_D$ und eine Induktivität $L_D$, welche die Leitung und die Gegenstation als Ersatzwiderstände nachbilden, sowie eine schematisch angedeutete Gleichspannungsquelle 7 verbunden, welche die Gegenstation abbildet. Die zwischen dem positiven Pol und dem negativen Pol des Gleichspannungskreises 6 abfallende Spannung ist $U_{D0}$, die an der Gleichspannungsquelle 7 abfallende Spannung $U_q$.

In Figur 2 ist der Aufbau der Leistungshalbleiterventilzweige 2 genauer dargestellt. Es ist erkennbar, dass jeder Leistungshalbleiterventilzweig 2 eine Reihenschaltung von bipolaren Submodulen 8 aufweist, deren Aufbau in Figur 3 verdeutlicht ist. Es ist erkennbar, dass jedes Submodul 8 über eine Leistungshalbleiterschaltung 9 verfügt, die mit einem Submodulkondensator 10 verbunden ist, so dass an Ausgangsklemmen 11 und 12 jedes Submoduls 8 entweder die an dem Submodulkondenstor 10 abfallende Spannung $u_{c,sub}$ oder aber eine Nullspannung erzeugbar ist. Dazu weist die Leistungshalbleiterschaltung 9 zwei abschaltbare Leistungshalbleiter S1 und S2 auf, die für hohe Spannungen ausgelegt und beispielsweise als IGBT, GTO oder dergleichen realisiert sind. Jedem abschaltbaren Leistungshalbleiter S1 beziehungsweise S2 ist eine Freilaufdiode 13 gegensinnig parallel geschaltet.

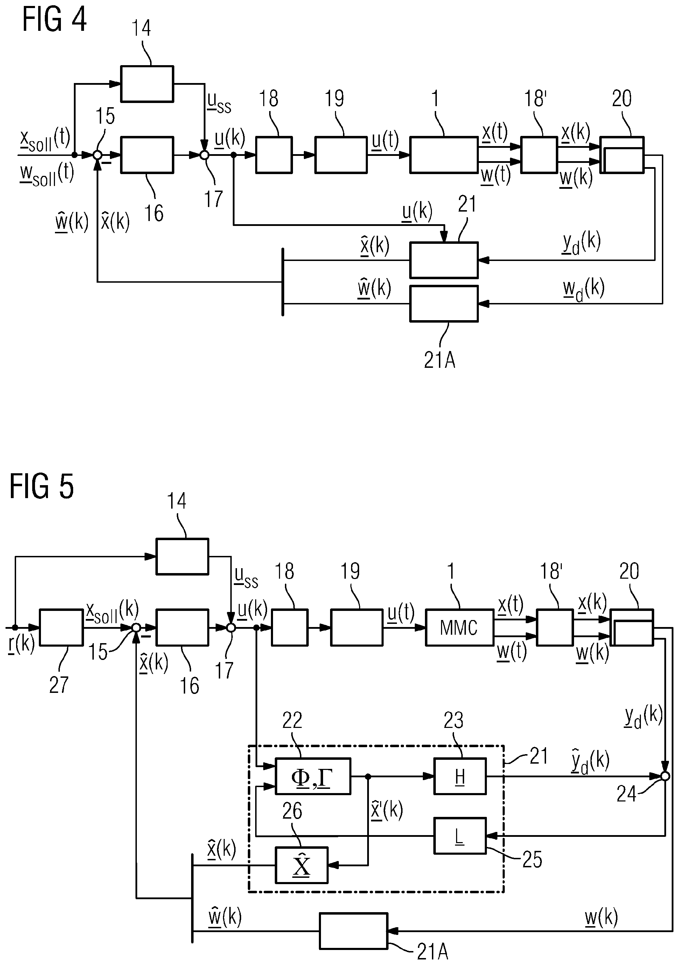

Figur 4 zeigt ein Ausführungsbeispiel des erfindungsgemäßen Verfahrens zum Regeln eines Umrichters gemäß den Figuren 1 bis 3. Wie bei Regelungen allgemein üblich, werden auch hier Sollwerte mit Istwerten verglichen oder mit anderen Worten die Differenz zwischen einem Sollwert und einem Istwert gebildet, wobei anschließend die auf diese Weise gewonnene Regeldifferenz einer Reglungseinheit zugeführt wird, die in den dargestellten Ausführungsbeispielen eine Vorsteuereinheit 14 und einen Regler 16 umfasst. Die Regelgrößen des in Figur 1 gezeigten Umrichters sind unter anderem die im Umrichter 1 fließenden Ströme. Hierbei ist es jedoch ausreichend, lediglich fünf Ströme zu betrachten, da sich die übrigen in Figur 1 gezeigten Ströme aus den bekannten fünf Strömen berechnen lassen. Sämtliche Strom-Regelgrößen werden erfindungsgemäß in einem Zustands-Stromvektor $\hat{x}(k)$ zusammengefasst. Entsprechendes gilt für die Sollgrößen, die mit dem Soll-Stromvektor $\underline{x}_{Soll}(k)$ vorgegeben sind. Der Sollvektor $\underline{x}_{Soll}(k)$ wird zum einen der Vorsteuereinheit 14 zugeführt, welche ausgehend von den Soll-Stromgrößen $\underline{x}_{Soll}(k)$ stationäre Stellspannungen $\underline{u}_{SS}$ be-rechnet. Mit Hilfe der Addiereinheit 15 wird die Differenz zwischen den Soll-Stromwerten $\underline{x}_{Soll}(k)$ und den Zustands-Stromwerten $\hat{x}(k)$ gebildet, wobei Regeldifferenzwerte erzeugt werden, die dem Regler 16 zugeführt werden. Ausgangsseitig stellt der Regel 16 Stellspannungen für Leistungshalbleiterventilzweige 2 des Umrichters 1 gemäß Figur 1 bereit. Zu diesen Stellspannungen werden die stationären Stellspannungen $u_{SS}$ mittels eines Addierers 17 hinzuaddiert, wobei im Abtastschritt k der Stellspannungsvektor $u(k)$ erzeugt wird.

Die Stellspannungen des Stellspannungsvektors $u(k)$ werden nun mit Hilfe eines Digital/Analogwandlers 18 in eine analoge Stellspannung $\underline{u}(t)$ umgewandelt und schließlich einer Steuerelektronik 19 zugeführt, welche in Abhängig-keit der jeweiligen Stellspannung $\underline{u}(t)$ Steuersignale für die Leistungshalbleiter S1, S2 eines jeden Submoduls 8 erzeugt. Die Steuersignale werden schließlich dem Umrichter 1 zugeführt, woraufhin sich die gewünschten Ströme $x(t)$ am Ausgang des Umrichters 1 einstellen. Diese Ströme werden mittels nicht dargestellter Sensoren gemessen, beispielsweise mit Hilfe von Stromwandlern und in einem nachgeordneten Analog/Digitalwandler 18' abgetastet und digitalisiert, so dass sich am Ausgang des Analog/Digitalwandlers 18' zum Abtastzeitpunkt $k$ der Zustandsvektor $\underline{x}(k)$ ergibt, der beispielsweise fünf unterschiedliche Ströme umfasst, so dass der Umrichter 1 vollständig charakterisiert ist.

In Figur 4 ist ferner ein Block 20 zur Symbolisierung von Verzögerungen gezeigt, die sich unvermeidlich zwischen dem eigentlichen Messzeitpunkt der Ströme des Umrichters 1 und der Weiterverarbeitung und Übertragung der Strommesswerte bei dem erfindungsgemäßen Verfahren ergeben. Diese Verzögerungen werden als Messverzögerungen oder Messtotzeiten bezeichnet. $\underline{y}_d(k)$ repräsentiert einen Zustandsvektor mit insofern verzögerten Ausgangsmesswerten.

Die verzögerten Ausgangsmesswerte $\underline{y}_d(k)$ werden einer Beobachtungseinheit 21 zugeführt, die als zweites Eingangssignal die Stellspannungen $\underline{u}(k)$ erhält. Die Beobachtereinheit 21, auf die später noch genauer eingegangen werden wird, prädiziert mit Hilfe eines mathematischen Modells des Umrichters 1, das sowohl Stell- als auch die Messverzögerungen berücksichtigt, die unverzögerten Zustands-Stromwerte $\hat{\underline{x}}(k)$ und stellt diese ausgangsseitig bereit. Der Regelungseinheit 16 werden dann die unverzögerten Zustands-Stromwerte $\hat{\underline{x}}(k)$ zur Verfügung gestellt.

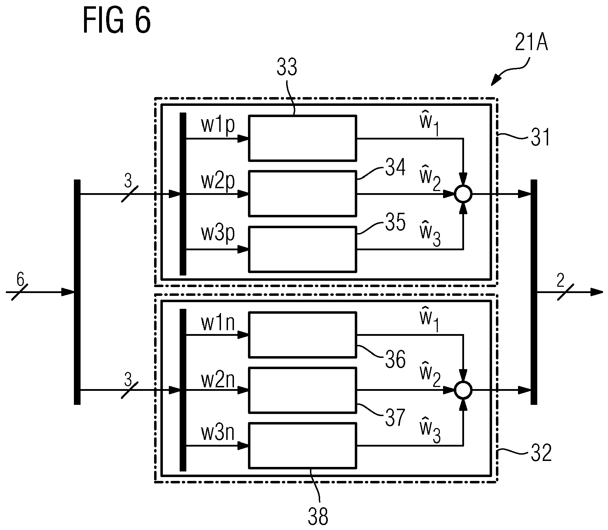

Wie die Fig. 4 ferner zeigt, werden auch Zwischenkreisenergiewerte $\underline{w}(t)$ gemessen und dem Eingang des Analog/Digitalwandlers 18' zugeführt; die Zwischenkreisenergiewerte werden durch Messung der Spannungen Uc an den Submodulen (vgl. Fig.3) und durch bekannte Errechnung der Zwischenkreisenergiewerte aus diesen Spannungen ermittelt. Auch hierbei ergeben sich durch die Weiterverarbeitung und Übertragung der Zwischenkreisenergiewerte Verzögerungen (vgl. Block 20). Diese verzögerten Zwischenkreisenergiewerte $\underline{w}_d(k)$ werden einer Schätzereinheit 21A zur Verfügung gestellt, in der mittels Schätzung (anhand eines Signalmodells der Zwischenkreisenergiewerte), die unten noch näher anhand der Fig. 6 erläutert wird, am Ausgang der Schätzereinheit 21A Zustands-Zwischenkreisenergiewerte $\hat{\underline{w}}(k)$ zur Verfügung stehen. In der Addiereinheit 15 werden diese Zustands-Zwischenkreisenergiewerte $\hat{\underline{w}}(k)$ mit Soll-Zwischenkreisenergiewerten $\underline{w}_{soll}(t)$ verglichen, und es wird die Differenz der als Mehrgrößenregler ausgebildeten Regelungseinheit 16 zugeführt. Daraufhin stellen sich am Ausgang des Umrichters 1 die gewünschten Zustands-Zwischenenergiewerte $\underline{w}(k)$ ein.

Insgesamt sind also bei der beschriebenen Regelung relativ viele Regelungsziele für den Umrichter 1 berücksichtigt, wodurch eine erheblich bessere und auch schnellere Regelung als bei einem Einsatz von kaskadierten Reglern erreicht ist.

Figur 5 verdeutlicht ein weiteres Ausführungsbeispiel der Erfindung, das dem in Figur 4 gezeigten Ausrührungsbeispiel weitestgehend entspricht. Allerdings umfasst der die Soll-Stromgrößen umfassende Vektor $\underline{x}_{Soll}(k)$ neben reinen Soll-Stromgrößen $\underline{r}(k)$ auch weitere Zustandsgrößen, die von einer Vorfiltereinheit 27 aus den Soll-Stromgrößen $\underline{r}(k)$ berechnet werden. Der Vorsteuereinheit 14 werden nur die Soll-Stromgrößen $\underline{r}(k)$ zugeführt. Der Ausgang der Vorfiltereinheit 27 umfasst die Soll-Stromgrößen $\underline{x}_{Soll}(k)$. Die weiteren Verfahrensschritte laufen analog zu dem in Figur 4 gezeigten Ausführungsbeispiel ab. Der Aufbau der Beobachtereinheit 21 ist jedoch genauer dargestellt:

Es ist erkennbar, dass die Beobachtungseinheit 21 eine Modelleinheit 22 aufweist, mit deren Hilfe der Umrichter 1 modelliert wird. Ausgangsseitig der Modelleinheit 22 wird ein Vektor $\hat{\underline{x}}'(k)$ bereitstellt, der sowohl die unverzögerten Zustands-Stromwerte $\hat{\underline{x}}(k)$ als auch Strommodellmesswerte umfasst, die den Zustands-Stromwerten entsprechen, jedoch mit Verzögerungen behaftet sind, also gegenüber den Zustands-Stromwerten $\underline{x}(t)$ verzögerten Modellausgangswerte $\hat{\underline{y}}_d(k)$ darstellen. Mit anderen Worten entsprechen Modellausgangswerte $\hat{\underline{y}}_d(k)$ reell erfassten Ausgangsmesswerten $\underline{y}_d(k)$. Die Ausschneideeinheit 23 schneidet aus dem Ausgang der Modelleinheit 22 nur die verzögerten Modellausgangswerte $\hat{\underline{y}}_d(k)$ heraus, wobei die Modellausgangswerte $\hat{\underline{y}}_d(k)$ durch einen Addierer 24 von den real gemessenen mit Verzögerungen behafteten Ausgangsmesswerten $\underline{y}_d(k)$ abgezogen werden. Die auf diese Weise gewonnene Modellausgangsabweichungsdifferenz wird schließlich einer Rückführungseinheit 25 zugeführt, welche eine Verstärkungs- oder Rückführungsmatrix $\underline{L}$ auf den Vektor der Modellausgangsabweichungsdifferenz anwendet. Hierdurch werden die Modellausgangsabweichungsdifferenzen verstärkt. Die verstärkten Modellausgangsabweichungsdifferenzen werden der Modelleinheit 22 schließlich als Eingang zugeführt, wobei der Entwurf der Rückführungsmatrix so erfolgt, dass $\hat{\underline{y}}_d(k)$ gegen $\underline{y}_d(k)$ konvergiert. Mit anderen Worten erfolgt der Entwurf der Rückführungsmatrix so, dass die Modellausgangsabweichungsdifferenz minimal wird.

Zum Herausschneiden der unverzögerten Stromistwerte $\hat{\underline{x}}(k)$ aus dem auch verzögerte Messwerte umfassenden Zustandsvektor $\hat{\underline{x}}'(k)$ als Ausgang der Modelleinheit 22 ist eine weitere Ausschneideeinheit 26 vorgesehen. Der Ausgang der Einheit 26 $\hat{\underline{x}}(k)$ wird dem Addierer 15 zugeführt und somit der weiteren Regelung zugrunde gelegt.

Im Folgenden wird auf das verwendete mathematische Modell eingegangen. Zur Modellierung von Messverzögerungen muss der Zustandsvektor, also der Vektor mit den unverzögerten Zustands-Stromwerten, um die verzögerten Messwerte erweitert werden.

$$\underline{\hat{x}}'(k) = \begin{pmatrix} \underline{\hat{x}}_k \\ \underline{\hat{y}}_{1d} \\ \vdots \\ \underline{\hat{y}}_{nd} \end{pmatrix}$$

Sei $\underline{\hat{y}}_d(k)$ ein Vektor der verzögerten Messgrößen, so gilt für die Verzögerung von einem Abtastschritt:

$$\underline{y}_{1d}(k+1) = \underline{y}(k)$$

Bei Verzögerungen von mehr als einem Abtastschritt gilt weiter

$$\underline{y}_{2d}(k+1) = \underline{y}_{1d}(k)$$

und

$$\underline{y}_d(k+1) = \underline{y}_{nd}(k)$$

Hieraus lässt sich das allgemeine Modell ableiten:

$$\underline{x}_{k+1} = \underline{\Phi}_d \, \underline{x}_k + \underline{\Gamma}_d \, \underline{u}_k$$

$$\underline{y}_d = \underline{H}_d \, \underline{x}_k$$

Weiterhin gelten:

$$\underline{\Phi}_d = \begin{pmatrix} \underline{\Phi} & \underline{0} & \dots & \underline{0} \\ \underline{H} & \underline{0} & \dots & \underline{0} \\ \underline{0} & \underline{I} & \dots & \underline{0} \\ \vdots & \dots & \ddots & \underline{0} \end{pmatrix}$$

$$\underline{\Gamma}_d = \begin{pmatrix} \underline{\Gamma} \\ \underline{0} \\ \vdots \\ \underline{0} \end{pmatrix}$$

$$\underline{H}_d = \begin{pmatrix} \underline{0} & \underline{0} & \dots & \underline{I} \end{pmatrix}$$

Somit steht ein Streckenmodell zur Verfügung, mit dessen Hilfe die Beobachtungseinheit 21 entworfen werden kann.

Die Modelleinheit 22 der Beobachtungseinheit 21 verwendet zur Modellierung des Umrichters 2 das oben genannte Streckenmodell gemäß

$$\hat{\underline{x}}'(k+1) = \underline{\Phi}\hat{\underline{x}}'(k) + \underline{\Gamma}\underline{u}(k)$$

Der Beobachtungsfehler kann nun definiert werden zu

$$\widetilde{\underline{x}} = \underline{x} - \hat{\underline{x}}'$$

Damit die Strommodellmesswerte auch gegen die gemessenen realen Strommesswerte konvergieren, wird eine Rückführungsmatrix L eingeführt, so dass sich folgende Gleichung ergibt:

$$\hat{\underline{x}}'(k+1) = \underline{\Phi}\hat{\underline{x}}'(k) + \underline{\Gamma}\underline{u}(k) + \underline{L}\left(\underline{y}(k) - \underline{H}\hat{\underline{x}}'(k)\right)$$

Zum Entwurf der Rückführungsmatrix muss die Fehlergleichung

$$\widetilde{\underline{x}}(k+1) = \left(\underline{\Phi} - \underline{LH}\right)\widetilde{\underline{x}}(k),$$

wobei die Dynamik ($\underline{\Phi}$ - $\underline{L}$H) so gewählt wird, dass die Strommodellmesswerte $\hat{\underline{y}}_d(k)$ auch gegen die gemessenen Ausgangsmesswerte $\underline{y}_d(k)$ konvergieren und zwar schneller als die Streckendynamik.
Zur Modellierung von Stellverzögerungen, die von der Steuerelektronik 19 erzeugt werden wird folgendes System angewandt:

$$\underline{x}(k+1) = \underline{\Phi}\underline{x}(k) + \underline{\Gamma}_0 u(k-(l-1)) + \underline{\Gamma}_1 \underline{u}(k-1).$$

Für die Stellverzögerung $\tau$ gilt

$$\tau = (l-1) \cdot T + \tau'$$

Die Systemmatrizen lauten:

$$\underline{\Phi} = e^{\underline{A}T}$$

$$\underline{\Gamma}_0 = \int_0^{h-\tau'} e^{\underline{A}s} ds\,\underline{B}$$

$$\underline{\Gamma}_1 = e^{\underline{A}(T-\tau')} \int_0^{\tau'} e^{\underline{A}s} ds\,\underline{B}$$

$$\begin{pmatrix} \underline{x}(k+1) \\ \underline{u}(k-(l-1)) \\ \underline{u}(k-(l-2)) \\ \underline{u}(k-1) \\ \underline{u}(k) \end{pmatrix} = \begin{pmatrix} \underline{\Phi} & \underline{\Gamma}_1 & \underline{\Gamma}_0 & \underline{0} & \underline{0} \\ \underline{0} & \underline{0} & \underline{I} & \underline{0} & \underline{0} \\ \underline{0} & \underline{0} & \underline{0} & \underline{I} & \underline{0} \\ \underline{0} & \underline{0} & \underline{0} & \underline{0} & \underline{I} \\ \underline{0} & \underline{0} & \underline{0} & \underline{0} & \underline{0} \end{pmatrix} \begin{pmatrix} \underline{x}(k) \\ \underline{u}(k-1) \\ \underline{u}(k-3) \\ \underline{u}(k-2) \\ \underline{u}(k-1) \end{pmatrix} + \begin{pmatrix} \underline{0} \\ \underline{0} \\ \underline{0} \\ \underline{0} \\ \underline{I} \end{pmatrix} \underline{u}(k)$$

Der Umrichter kann vollständig mit Mess- und Stellverzögerungen modelliert werden, indem man die oben gezeigten Modellierungen kombiniert. Es ergibt sich als direkte Darstellung der Differenzgleichung des modellierten Systems:

$$\underline{x}_\tau^d(k+1) = \underline{\Phi}_\tau^d \, \underline{x}_\tau^d(k) + \underline{\Gamma}_\tau^d u(k)$$

$$\underline{y}_d = \underline{H}_\tau^d \, \underline{x}_\tau^d(k)$$

Die Systemmatrizen werden hier beispielhaft für eine Messverzögerung d in Abtastschritten und eine Stellverzögerung von $\tau=(l\text{-}1)\cdot T+\tau'$ erstellt, wobei auch nichtganzzahlige Stellverzögerungen modelliert werden.

$$\underline{\Phi}_\tau^d = \begin{pmatrix} \underline{\Phi} & \underline{0} & \underline{0} & \cdots & \underline{0} & \underline{\Gamma}_1 & \underline{\Gamma}_0 & \cdots & \underline{0} \\ \underline{H} & \underline{0} & \underline{0} & \cdots & \underline{0} & \underline{0} & \underline{0} & \cdots & \underline{0} \\ \underline{0} & \underline{I} & \underline{0} & \cdots & \underline{0} & \underline{0} & \underline{0} & \cdots & \underline{0} \\ \underline{0} & \underline{0} & \underline{I} & \cdots & \underline{0} & \underline{0} & \underline{0} & \cdots & \underline{0} \\ \vdots & \vdots & \vdots & \ddots & \vdots & \vdots & \vdots & \ddots & \vdots \\ \underline{0} & \underline{0} & \underline{0} & \cdots & \underline{I} & \underline{0} & \underline{0} & \cdots & \underline{0} \\ \underline{0} & \underline{0} & \underline{0} & \cdots & \underline{0} & \underline{0} & \underline{I} & \cdots & \underline{0} \\ \vdots & \vdots & \vdots & \cdots & \vdots & \vdots & \vdots & \ddots & \vdots \\ \underline{0} & \underline{0} & \underline{0} & \cdots & \underline{0} & \underline{0} & \underline{0} & \cdots & \underline{I} \\ \underline{0} & \underline{0} & \underline{0} & \cdots & \underline{0} & \underline{0} & \underline{0} & \cdots & \underline{0} \end{pmatrix}$$

$$\underline{x}_\tau^d = \begin{pmatrix} \underline{\hat{x}}_k \\ \underline{y}_k \\ \underline{y}_{k-1} \\ \vdots \\ \underline{y}_{k-d} \\ \underline{u}(k-l+1) \\ \vdots \\ \underline{u}(k-1) \\ \underline{u}(k) \end{pmatrix}$$

$$\underline{\Gamma}_\tau^d = \begin{pmatrix} \underline{0} \\ \underline{0} \\ \underline{0} \\ \vdots \\ \underline{0} \\ \underline{0} \\ \vdots \\ \underline{0} \\ \underline{I} \end{pmatrix}$$

$$\underline{H}_\tau^d = \begin{pmatrix} \underline{0} & \underline{0} & \underline{0} & \cdots & \underline{I} & \underline{0} & \cdots & \underline{0} \end{pmatrix}$$

Für den mehrstufigen Umrichter gemäß Figur 1 wird l=2 und d=4 angenommen. Es ergeben sich dann folgende Matrizen:

$$
\Phi_{MMC} = \begin{pmatrix}
\underline{\Phi} & \underline{0} & \underline{0} & \underline{0} & \underline{0} & \underline{\Gamma}_1 & \underline{\Gamma}_0 \\
\underline{H} & \underline{0} & \underline{0} & \underline{0} & \underline{0} & \underline{0} & \underline{0} \\
\underline{0} & \underline{I} & \underline{0} & \underline{0} & \underline{0} & \underline{0} & \underline{0} \\
\underline{0} & \underline{0} & \underline{I} & \underline{0} & \underline{0} & \underline{0} & \underline{0} \\
\underline{0} & \underline{0} & \underline{0} & \underline{I} & \underline{0} & \underline{0} & \underline{0} \\
\underline{0} & \underline{0} & \underline{0} & \underline{0} & \underline{0} & \underline{0} & \underline{I} \\
\underline{0} & \underline{0} & \underline{0} & \underline{0} & \underline{0} & \underline{0} & \underline{0}
\end{pmatrix}
$$

$$
\hat{\underline{x}}'_{MMC} = \begin{pmatrix}
\hat{\underline{x}}_k \\
\underline{y}_k \\
\underline{y}_{k-1} \\
\underline{y}_{k-2} \\
\underline{y}_{k-3} \\
\underline{u}(k-1) \\
\underline{u}(k)
\end{pmatrix}
$$

$$
\underline{\Gamma}_{MMC} = \begin{pmatrix}
\underline{0} \\
\underline{0} \\
\underline{0} \\
\underline{0} \\
\underline{0} \\
\underline{0} \\
\underline{I}
\end{pmatrix}
$$

$$
\underline{H}_{MMC} = \begin{pmatrix} \underline{0} & \underline{0} & \underline{0} & \underline{0} & \underline{I} & \underline{0} & \underline{0} \end{pmatrix}
$$

Mit der auf dieser Weise möglichen Modellierung des Umrichters können die unverzögerten Stromistwerte berechnet werden.

Die Schätzereinheit 21A wirkt in derselben Weise, wie es bei der Erläuterung der Fig. 4 bereits beschrieben worden ist.

Die in der Fig. 6 dargestellte Schätzereinheit 21A ist an alle sechs Leistungshalbleiterventilzweige 2 des Umrichters 1 angeschlossen, was in der schemeatischen Darstellung mit der Ziffer "6" symbolisiert ist. Dabei ist der Anschluss so getroffen, dass die drei jeweils positiv-seitigen (z.B. in Fig. 2 oberen) Leistungshalbleiterventilzweige 2 getrennt von den drei jeweils negativ-seitigen (in Fig. 2 unteren) Leistungshalbleiterventilzweigen 2 der Schätzereinheit 21A zugeführt werden, durch die Ziffer "3" jeweils symbolisiert.

Die Schätzereinheit 21A umfasst eine erste Schätzeruntereinheit 31 und eine weitere Schätzeruntereinheit 32; die Schätzeruntereinheit 31 wiederum ist mit jeweils einem Schätzer 33, 34 und 35 ausgestattet, die an jeweils einem positiv-seitigen Leistungshalbleiterventilzweig 2 des Umrichters 1 angeschlossen sind und somit mit Zwischenkreisenergiewerten w1p bis w3p der positiv-seitigen Leistungshalbleiterventilzweige 2 beaufschlagt sind. Entsprechend sind Schätzern 36, 37 und 38 der Schätzeruntereinheit 32 Zwischenkreisenergiewerte w1n bis w3n der negativ-seitigen Leistungshalbleiterventilzweige 2 zugeführt.

Die Schätzer 33 bis 38 sind jeweils Parameter-Schätzer, beispielsweise Least-Square-Schätzer. Jedem Parameter-Schätzer 33 bis 38 ist im hier beschriebenen Ausführungsbeispiel ein Schwingungsmodell der Zwischenenergiewerte $w(t)$ vorgegeben, das sich durch folgende Gleichung mathematisch beschreiben lässt:

$$w(t) = A_0(t) + A_{11}(t) * \cos(\omega t) + A_{12}(t) * \sin(\omega t) + A_{21}(t) * \cos(2\omega t) +$$

$$A_{22}(t) * \sin(2\omega t)$$

In dieser Gleichung geben $A_0(t)$ den Gleichanteil der Zwischenkreisenergiewerte $w(t)$ und $A_{11}(t)$ bis $A_{22}(t)$ weitere Parameter des Schwindungsmodells an; $\omega$ bezeichnet die Kreisfrequenz des mit dem Umrichter 1 verbundenen Wechselspannungsnetzes. Der besseren Übersichtlichkeit halber ist in der Fig.6 nicht im Einzelnen dargestellt, wie die einzelnen Least-Square-Schätzer mit einer der Frequenz des Wechselspannungsnetzes entsprechenden Messgröße beaufschlagt sind.

Bei dem durch die obige Gleichung beschriebenen Schwingungsmodell werden von den Least-Square-Schätzern zeitabhängige Parameter $A_0(t)$ bis $A_{22}(t)$ benutzt, was zu einer hohen Genauigkeit der Schätzung führt, aber auch relativ aufwendig ist. Als Zeitabhängigkeit kann beispielsweise eine lineare Funktion oder eine Exponentialfunktion gewählt werden.

In den Least-Square-Schätzern 33 bis 38 werden rekursiv die oben angegebenen Parameter $A_0(t)$ bis $A_{22}(t)$ berechnet, so dass an den Ausgängen der Least-Square-Schätzer jeweils diese Parameter abgegriffen werden können. In obigem Beispiel sind Oberschwingungen nur bis zur zweiten Oberwelle berücksichtigt. Zur Verfeinerung kann ggf. ein Schwingungsmodell mit weiteren Parametern höherer Oberwellen verwendet werden.

## Patentansprüche

1. Verfahren zum Regeln eines steuerbare Leistungshalbleiter aufweisenden Umrichters (1), bei dem

   - Zustands-Stromwerte $\hat{\underline{x}}(k)$ und Zustands-Zwischenkreisenergiewerte in einem den Zustand des Umrichters (1) beschreibenden Zustandsvektor zusammen gefasst werden,
   Stromsollwerte und Zwischenkreisenergiesollwerte in einem Sollvektor zusammen gefasst werden,
   der Zustandsvektor und der Sollvektor unter Gewinnung von Regeldifferenzwerten verglichen werden,
   - die Regeldifferenzwerte einer Regelungseinheit (14, 16) zugeführt werden, die an ihrem Ausgang derartige Stellspannungswerte $\underline{u}(k)$ erzeugt, dass die Regeldifferenzwerte möglichst klein werden,
   - eine Steuerelektronik (19) in Abhängigkeit der Stellspannungswerte $\underline{u}(k)$ Steuersignale bereitstellt und an die Leistungshalbleiter (S1, S2) des Umrichters (1) überträgt, wobei

   - die Zustands-Stromwerte $\hat{\underline{x}}(k)$ von einer Beobachtungseinheit (21) ausgehend von den Stellspannungswerten $\underline{u}(k)$ aus gemessenen Stromwerten berechnet werden, wobei die Beobachtungseinheit (21) den Umrichter (1) modelliert und Verzögerungseffekte berücksichtigt, so dass die Zustands-Stromwerte $\hat{\underline{x}}(k)$ den von Verzögerungseffekten befreiten unverzögerten, gemessenen Strommwerten entsprechen, und wobei
   - die Zustands-Zwischenkreisenergiewerte ($\hat{w}(k)$) mittels einer auf ein Signalmodell der Zwischenkreisenergiewerte zurück greifenden Schätzereinheit (21A) aus gemessenen Zwischenkreisenergiewerten ermittelt werden, wobei die Schätzereinheit (21A) die Parameter des Signalmodells der Zwischenkreisenergiewerte ($w(k)$) unter Ermittlung jeweils einer Zustands-Zwischenkreisenergiewerte ($\hat{w}(k)$) der positiv-seitigen und die negativ-seitigen Drehspannungsquelle des Umrichters (1) darstellenden Gleichgröße errechnet, und

   - die Zustands-Zwischenkreisenergiewerte ($\hat{w}(k)$) zusätzlich zu den Zustands-Stromwerten ($\hat{x}(k)$) der Regelungseinheit (14,16) zugeführt werden.

2. Verfahren nach Anspruch 1,
   **dadurch gekennzeichnet, dass**

   - die Zustands-Zwischenkreisenergiewerte der positiv-seitigen und der negativ-seitigen Leistungshalbleiterventilzweige (2) des Umrichters (1) jeweils für sich erfasst werden,
   - mittels jeweils eines Parameter-Schätzers (33, 34, 35; 36, 37, 38) der Schätzereinheit (21A) die Parameter des Signalmodells der Zwischenenergiewerte ($w(k)$) errechnet werden,
   - die jeweils einen Gleichanteil beschreibenden Parameter der positiv-seitigen und der negativen Leistungshalbleiterventilzweige (2) jeweils für sich unter Bildung der Zwischenkreisenergie-Gleichgrößen addiert werden.

3. Verfahren nach Anspruch 2,
   **dadurch gekennzeichnet, dass**

   - Parameter-Schätzer mit rekursivem Algorithmus verwendet werden.

4. Verfahren nach Anspruch 2 oder 3,
   **dadurch gekennzeichnet, dass**

   - als Schätzer ein Parameter-Schätzer mit einem Schwingungsmodell $w(t)$ für die Zwischenkreisenergiewerte

   $$w(t) \;=\; \text{A}_0 + \text{A}_{k1}*\cos(k\omega t) + \text{A}_{k2}*\sin(k\omega t) \quad \text{für } k=1 \text{ bis } n$$

   verwendet wird,

   • in dem $A_0$ den Gleichanteil der Zwischenkreisenergiewerte und $A_{k1}$ und $A_{k2}$ weitere Parameter des Schwingungsmodells sowie $\omega$ die Kreisfrequenz eines mit dem Umrichter (1) verbundenen Wechselspannungsnetzes angibt.

5. Verfahren nach Anspruch 4,
   **dadurch gekennzeichnet, dass**

   - als Schätzer ein Parameter -Schätzer mit einem Schwingungsmodell $w(t)$ für die Zwischenkreisenergiewerte

   $$w(t) \;=\; \text{A}_0 + \text{A}_{11}*\cos(\omega t) + \text{A}_{12}*\sin(\omega t) + \text{A}_{21}*\cos(2\omega t) + \text{A}_{22}*\sin(2\omega t)$$

   verwendet wird,

   • in dem $A_0$ den Gleichanteil der Zwischenkreisenergiewerte und $A_{11}$ bis $A_{22}$ weitere Parameter des Schwingungsmodells sowie $\omega$ die Kreisfrequenz eines mit dem Umrichter (1) verbundenen Wechselspannungsnetzes angibt.

6. Verfahren nach Anspruch 4 oder 5,
   **dadurch gekennzeichnet, dass**

   • ein Schwindungsmodell mit zeitabhängigen Parametern $A_0(t)$ bis $A_{k2}(t)$ verwendet wird.

7. Verfahren nach Anspruch 6,
   **dadurch gekennzeichnet, dass**

   • die Zeitabhängigkeit der Parameter durch eine lineare Funktion oder eine Exponentialfunktion vorgegeben wird.

8. Verfahren nach Anspruch 4 oder 5,
   **dadurch gekennzeichnet, dass**

   • ein Schwindungsmodell mit zeitlich konstanten Parametern $A_0$ bis $A_{k2}$ verwendet wird.

9. Verfahren nach einem der vorangehenden Ansprüche,
   **dadurch gekennzeichnet, dass**

   - die Beobachtungseinheit (21) neben den unverzögerten Zustands-Stromwerten $\hat{\underline{x}}(k)$ verzögerte Modellausgangswerte $\hat{\underline{y}}_d(k)$ bereitstellt, die am Eingang der Beobachtungseinheit (21) erfassten Ausgangsmesswerten $\underline{y}_d(k)$ entsprechen, wobei

     - die Modellausgangswerte $\hat{\underline{y}}_d(k)$ mit den erfassten Ausgangsmesswerten $\underline{y}_d(k)$ unter Gewinnung einer Modellausgangsabweichungsdifferenz verglichen werden, die Modellausgangsabweichungsdifferenz der Beobachtungseinheit (21) eingangsseitig zugeführt und die Modellierung des Umrichters (1) so durchgeführt wird, dass die Modellausgangsabweichungsdifferenz möglichst klein wird.

**10.** Verfahren nach einem der vorhergehenden Ansprüche,
**dadurch gekennzeichnet, dass**

- die Modellausgangsabweichungsdifferenz der Beobachtungseinheit (21) über eine Rückführungseinheit (25) zugeführt wird, welche die Modellausgangsabweichungsdifferenzen verstärkt.

**11.** Verfahren nach einem der vorhergehenden Ansprüche,
**dadurch gekennzeichnet, dass**

- die Berücksichtigung von Verzögerungseffekten das Berücksichtigen von Messverzögerungen, die bei der digitalen Erfassung der Zustandsgrößen des Umrichters (1) entstehen, und die Berücksichtung von Stellverzögerungen umfasst, die von der Steuerelektronik (19) verursacht werden.

**12.** Verfahren nach Anspruch 11,
**dadurch gekennzeichnet, dass**

- bei der Erfassung der Ausgangsmesswerte $\underline{y}_d(k)$ die Stromwerte des Umrichters (1) gemessen, das dabei gewonnene Messsignal in Abtastschritten unter Gewinnung von Abtastwerten fortlaufend abgetastet und die Abtastwerte anschließend digitalisiert werden, wobei die Modellierung der sich dabei einstellenden Messverzögerungen in der Beobachtungseinheit (21) unter der Annahme erfolgt, dass die Messverzögerung einer Zeitdauer von vier Abtastschritten entspricht.

**13.** Verfahren nach Anspruch 11 oder 12,
**dadurch gekennzeichnet, dass**

- eine Stellverzögerung $\tau$ gemäß

$$\tau = (l-1)\cdot \mathrm{T} + \tau'$$

modelliert wird, wobei $l$ der Anzahl der Abtastschritte entspricht, deren Summe kleiner ist als die Stellverzögerung $\tau$, und $\tau'$ als Restanteil kürzer ist als die Zeitdauer zwischen zwei Abtastschritten k.

**14.** Verfahren nach Anspruch 13,
**dadurch gekennzeichnet, dass**

- $l$ gleich 2 oder 1 ist.

**15.** Verfahren nach einem der vorhergehenden Ansprüche,
**dadurch gekennzeichnet, dass**

- der Umrichter (1) mit Hilfe eines Zustandraummodells gemäß

$$\hat{\underline{x}}'_{k+1} = \underline{\Phi}\hat{\underline{x}}'_k + \underline{\Gamma}\underline{u}_k$$

$$\hat{\underline{y}}_d = \underline{H}\hat{\underline{x}}'_k$$

modelliert wird, wobei $\hat{\underline{x}}'(k)$ einem Zustandsvektor des Umrichters (1) einschließlich verzögerten Zuständen, $\underline{u}_k$ einem Vektor der Stellspannungen, $\underline{\Phi}$, $\underline{\Gamma}$ und $\underline{H}$ Modellmatrizen und $\hat{\underline{y}}_d$ einem Vektor von mit Verzögerungen behafteten Modellausgangswerten entsprechen.

**16.** Verfahren nach einem der vorhergehenden Ansprüche,

**dadurch gekennzeichnet, dass**

- der Umrichter (1) ein Multilevel-Umrichter ist, der zu einer Brückenschaltung miteinander verbundene Leistungshalbleiterventilzweige (2) aufweist, wobei
- jeder Leistungshalbleiterventilzweige (2) aus einer Reihenschaltung von bipolaren Submodulen (8) besteht und jedes Submodul (8) eine Schaltung (9) von Leistungshalbleitern sowie eine parallel dazu angeordnete Kondensatoreinheit (10) umfasst.

17. Anordnung zur Regelung eines Umrichters (1) mit einer Regelungseinheit (14,16), bei dem

- die Regelungseinheit (14,16) ausgangsseitig mit einem Eingang einer ein Modell des Umrichters darstellenden Beobachtungseinheit (21) verbunden ist, die mit einem weiteren Eingang an den Ausgang des Umrichters (1) angeschlossen ist, bei dem ferner
- an den Ausgang des Umrichters (1) eine das Signalmodell von Zwischenkreisenergiewerten ($w(k)$) nachbildenden Schätzereinheit (21A) angeschlossen ist und bei der
- die Beobachtungseinheit (21) und die Schätzereinheit (21A) ausgangsseitig mit Ist-Eingängen der Regelungseinheit (14,16) verbunden sind.

18. Anordnung nach Anspruch 17,
**dadurch gekennzeichnet, dass**

- bei einem Umrichter (1) mit sechs Leistungshalbleiterventilzweigen (2) die Schätzereinheit (21A) für jeden der drei positiv-seitigen Leistungshalbleiterventilzweige (2) jeweils einen Schätzer (33,34,35) und für jeden der drei negativ-seitigen Leistungshalbleiterventilzweige (2) jeweils einen weiteren Schätzer (36,37,38) aufweist.

19. Anordnung nach Anspruch 17 oder 18
**dadurch gekennzeichnet, dass**

- die Beobachtungseinheit (21) eine den Umrichter (1) nachbildende Modelleinheit (22) aufweist, die mit ihrem einen Eingang mit dem Ausgang der Regelungseinheit (14,16) und mit ihrem anderen Eingang mit dem Ausgang einer Rückführungseinheit (25) verbunden ist,
- die Rückführungseinheit (25) mit dem Ausgang einer Summierschaltung (24) verbunden ist, die mit ihrem einen Eingang an den Ausgang des Umrichters (1) und mit ihrem weiteren Eingang an den Ausgang einer Ausschneideeinheit (23) angeschlossen ist, wobei die Ausschneideeinheit (23) mit dem Ausgang der Modelleinheit (22) verbunden ist, und
- der Ausgang der Modelleinheit (22) über eine weitere Ausschneideeinheit (26) mit dem Eingang der Regelungseinheit (14,16) verbunden ist.

**Claims**

1. Method for controlling a converter (1) having controllable power semiconductors, in which

- state current values $\hat{\underline{x}}(k)$ and state intermediate circuit energy values are combined in a state vector describing the state of the converter (1),
current setpoint values and intermediate circuit energy setpoint values are combined in a setpoint vector,
the state vector and the setpoint vector are compared to obtain control difference values,
- the control difference values are fed to a control unit (14, 16), which generates such actuating voltage values $\underline{u}(k)$ at its output that the control difference values become as small as possible,
- control electronics (19) provide control signals depending on the actuating voltage values $\underline{u}(k)$ and transmit them to the power semiconductors (S1, S2) of the converter (1), wherein

- the state current values $\hat{\underline{x}}(k)$ are calculated from measured current values by an observation unit (21) proceeding from the actuating voltage values $\underline{u}(k)$, wherein the observation unit (21) models the converter (1) and takes delay effects into account so that the state current values $\hat{\underline{x}}(k)$ correspond to the instantaneous measured current values freed of delay effects,
and wherein
- the state intermediate circuit energy values ($\hat{\underline{w}}(k)$) are determined from measured intermediate circuit energy values by means of an estimator unit (21A) that has recourse to a signal model of the intermediate circuit energy values, wherein the estimator unit (21A) calculates the parameters of the signal model of the intermediate circuit energy values ($w(k)$) by determining in each case a DC variable representing state intermediate circuit energy values ($\hat{w}(k)$) of the positive-side and the negative-side three-phase voltage source of the converter (1), and
- in addition to the state current values $\hat{\underline{x}}(k)$, the state intermediate circuit energy values ($\hat{\underline{w}}(k)$) are fed to the control unit (14, 16).

**2.** Method according to Claim 1, **characterized in that**

- the state intermediate circuit energy values of the positive-side and the negative-side power semiconductor valve branches (2) of the converter (1) are respectively individually detected,
- the parameters of the signal model of the intermediate energy values ($w(k)$) are calculated by means of a respective parameter estimator (33, 34, 35; 36, 37, 38) of the estimator unit (21A),
- the parameters of the positive-side and the negative-side power semiconductor valve branches (2) that describe a respective DC component are respectively individually added so as to form the intermediate circuit energy DC variables.

**3.** Method according to Claim 2, **characterized in that**

- parameter estimators having a recursive algorithm are used.

**4.** Method according to Claim 2 or 3, **characterized in that**

- as estimator, a parameter estimator having an oscillation model $w(t)$ is used for the intermediate circuit energy values

$$w(t) = A_0 + A_{k1}*\cos(k\omega t) + A_{k2}*\sin(k\omega t) \text{ for } k=1 \text{ to } n,$$

• in which $A_0$ specifies the DC component of the intermediate circuit energy values and $A_{k1}$ and $A_{k2}$ specify further parameters of the oscillation model and $\omega$ specifies the angular frequency of an AC voltage power supply system connected to the converter (1).

**5.** Method according to Claim 4, **characterized in that**

- as estimator, a parameter estimator having an oscillation model $w(t)$ is used for the intermediate circuit energy values

$$w(t) = A_0 + A_{11}*\cos(\omega t) + A_{12}*\sin(\omega t) + A_{21}*\cos(2\omega t) + A_{22}*\sin(2\omega t),$$

• in which $A_0$ specifies the DC component of the intermediate circuit energy values and $A_{11}$ to $A_{22}$ specify further parameters of the oscillation model and $\omega$ specifies the angular frequency of an AC voltage power supply system connected to the converter (1).

**6.** Method according to Claim 4 or 5, **characterized in that**

• an oscillation model having time-dependent parameters $A_0(t)$ to $A_{k2}(t)$ is used.

**7.** Method according to Claim 6, **characterized in that**

• the time dependency of the parameters is prescribed by a linear function or an exponential function.

**8.** Method according to Claim 4 or 5, **characterized in that**

• an oscillation model with temporally constant parameters $A_0$ to $A_{k2}$ is used.

9. Method according to one of the preceding claims, **characterized in that**

- the observation unit (21) provides, in addition to the instantaneous state current values $\hat{\underline{x}}(k)$, delayed model output values $\hat{\underline{y}}_d(k)$, which correspond to output measurement values $\underline{y}_d(k)$ detected at the input of the observation unit (21), wherein
- the model output values $\hat{\underline{y}}_d(k)$ are compared with the detected output measurement values $\underline{y}_d(k)$ so as to obtain a model output deviation difference, the model output deviation difference is fed to the input-side of the observation unit (21) and the converter (1) is modelled in such a way that the model output deviation difference becomes as small as possible.

10. Method according to one of the preceding claims, **characterized in that**

- the model output deviation difference is fed to the observation unit (21) by means of a feedback unit (25), which amplifies the model output deviation differences.

11. Method according to one of the preceding claims, **characterized in that**

- the taking into account of delay effects comprises the taking into account of measurement delays caused during digital detection of the state variables of the converter (1) and the taking into account of actuating delays caused by the control electronics (19).

12. Method according to Claim 11, **characterized in that**

- during the detection of the output measurement values $\underline{y}_d(k)$, the current values of the converter (1) are measured, the measurement signal obtained in the process is continuously sampled at sampling steps so as to obtain sampling values and the sampling values are then digitized, wherein the measurement delays established in the process are modelled in the observation unit (21) assuming that the measurement delay corresponds to a time period of four sampling steps.

13. Method according to Claim 11 or 12, **characterized in that**

- an actuating delay $\tau$ is modelled according to

$$\tau = (l-1)\cdot \mathrm{T} + \tau'$$

wherein $l$ corresponds to the number of sampling steps whose sum is less than the actuating delay $\tau$, and $\tau'$ as residual component is shorter than the time period between two sampling steps k.

14. Method according to Claim 13, **characterized in that**

- $l$ is equal to 2 or 1.

15. Method according to one of the preceding claims, **characterized in that**

- the converter (1) is modelled with the aid of a state space model according to

$$\hat{\underline{x}}'_{k+1} = \underline{\Phi}\hat{\underline{x}}'_k + \underline{\Gamma}\underline{u}_k$$

$$\hat{\underline{y}}_d = \underline{H}\hat{\underline{x}}'_k$$

wherein $\hat{\underline{x}}'(k)$ corresponds to a state vector of the converter (1) including delayed states, $\underline{u}_k$ corresponds to a vector of the actuating voltages, $\underline{\Phi}$, $\underline{\Gamma}$ and $\underline{H}$ correspond to model matrices and $\hat{\underline{y}}_d$ corresponds to a vector of model output values afflicted with delays.

**16.** Method according to one of the preceding claims, **characterized in that**

- the converter (1) is a multilevel converter, which has power semiconductor valve branches (2) connected to one another to form a bridge circuit, wherein

- each power semiconductor valve branch (2) consists of a series circuit of bipolar submodules (8) and each submodule (8) comprises a circuit (9) of power semiconductors and a capacitor unit (10) arranged in parallel therewith.

**17.** Arrangement for controlling a converter (1) having a control unit (14, 16), in which

- the control unit (14, 16) is connected on the output side to an input of an observation unit (21) representing a model of the converter, said observation unit being connected to a further input at the output of the converter (1), in which furthermore
- at the output of the converter (1), an estimator unit (21A) that copies the signal model of intermediate circuit energy values ($w(k)$) is connected and in which
- the observation unit (21) and the estimator unit (21A) are connected on the output side to actual inputs of the control unit (14, 16).

**18.** Arrangement according to Claim 17, **characterized in that**

- in the case of a converter (1) having six power semiconductor valve branches (2), the estimator unit (21A) has a respective estimator (33, 34, 35) for each of the three positive-side power semiconductor valve branches (2) and has a respective further estimator (36, 37, 38) for each of the three negative-side power semiconductor valve branches (2).

**19.** Arrangement according to Claim 17 or 18, **characterized in that**

- the observation unit (21) has a modelling unit (22) that copies the converter (1), said modelling unit being connected by way of its one input to the output of the control unit (14, 16) and by way of its other input to the output of a feedback unit (25),
- the feedback unit (25) is connected to the output of a summing circuit (24), which is connected by way of its one input to the output of the converter (1) and by way of its further input to the output of a cut-out unit (23), wherein the cut-out unit (23) is connected to the output of the modelling unit (22), and
- the output of the modelling unit (22) is connected to the input of the control unit (14, 16) by means of a further cut-out unit (26).

**Revendications**

**1.** Procédé de réglage d'un convertisseur (1) ayant un semiconducteur de puissance pouvant être commandé, dans lequel

- on saisit ensemble des valeurs $\hat{x}(k)$ de courant-état et des valeurs d'énergie de circuit intermédiaire en un vecteur d'état décrivant l'état du convertisseur (1),
on saisit des valeurs de consigne de courant et des valeurs de consigne d'énergie de circuit intermédiaire en un vecteur de consigne,
on compare le vecteur d'état et le vecteur de consigne en obtenant des valeurs de différence de réglage,
- on envoie les valeurs de différence de réglage à une unité
(14, 16) de régulation, qui produit, à sa sortie, des valeurs $\underline{u}(k)$ de tension de réglage telles que les valeurs de différence de réglage deviennent aussi petites que possible,
- une électronique (19) de commande met à disposition des signaux de commande en fonction des valeurs $\underline{u}(k)$ de tension de réglage et les transmet aux semi-conducteurs (S1, S2) de puissance du convertisseur (1), dans lequel

- on calcule, à partir des valeurs de courant mesurées, les valeurs $\hat{x}(k)$ de courant-état par une unité (21) d'observation, en partant des valeurs $\underline{u}(k)$ de tension de réglage, l'unité (21) d'observation modélisant le convertisseur (1) et tenant compte d'effets de retard, de manière à ce que les valeurs $\hat{x}(k)$ de courant-état correspondent aux valeurs de courant mesurées non-retardées et débarrassées d'effets de retard, et dans lequel

- on détermine, à partir des valeurs d'énergie de circuit intermédiaires mesurées, les valeurs ($\hat{w}(k)$) d'énergie de circuit intermédiaire-état au moyen d'une unité (21A) d'estimation se reportant à un modèle de signal des valeurs d'énergie de circuit intermédiaire, l'unité (21A) d'estimation calculant les paramètres du modèle de signal des valeurs ($w(k)$) d'énergie de circuit intermédiaire, en déterminant des grandeurs continues représentant, respectivement, une valeur ($\hat{w}(k)$) d'énergie de circuit intermédiaire-état de la source de tension triphasée du côté positif et du côté négatif du convertisseur et

- on envoie les valeurs valeur ($\hat{w}(k)$) d'énergie de circuit intermédiaire-état supplémentairement aux valeurs $\hat{\underline{x}}(k)$ de courant-état à l'unité (14, 16) de régulation.

2. Procédé suivant la revendication 1,
   **caractérisé en ce que**

   - on relève chacune pour soi les valeurs d'énergie de circuit intermédiaire-état des branches (2) de soupape à semi-conducteurs de puissance du côté positif et du côté négatif du convertisseur (1),
   - au moyen de, respectivement, un estimateur (33, 34, 35; 36, 37, 38) de paramètres de l'unité (21A) d'estimation, on calcule les paramètres du module de signal des valeurs ($w(k)$) d'énergie de circuit intermédiaire,
   - on additionne chacune pour soi, en formant les grandeurs continues-énergie de circuit intermédiaire, les paramètres, décrivant une partie continue, des branches (2) de soupape à semi-conducteurs de puissance du côté positif et du côté négatif.

3. Procédé suivant la revendication 2,
   **caractérisé en ce que**

   - on utilise des estimateurs de paramètres à algorithme récursif.

4. Procédé suivant la revendication 2 ou 3,
   **caractérisé en ce que**

   - l'on utilise, comme estimateur, un estimateur de paramètres ayant un modèle $w(t)$ d'oscillation pour les valeurs d'énergie de circuit intermédiaire

$$w(t) = A_0 + A_{k1} * \cos(k \omega t) + A_{k2} * \sin(k \omega t) \text{ pour } k=1 \text{ à } n$$

   • dans laquelle $A_0$ est la partie continue des valeurs d'énergie de circuit intermédiaire et $A_{k1}$ et $A_{k2}$ sont d'autres paramètres du modèle d'oscillation, ainsi que $\omega$ est la pulsation d'un réseau de tension alternative relié au convertisseur (1).

5. Procédé suivant la revendication 4,
   **caractérisé en ce que**

   - l'on utilise, comme estimateur, un estimateur de paramètres ayant un modèle $w(t)$ d'oscillation pour les valeurs d'énergie de circuit intermédiaire

$$w(t) = A_0 + A_{11} * \cos(\omega t) + A_{12} * \sin(\omega t) + A_{21} * \cos(2 \omega t) + A_{22} * \cos(2 \omega t)$$

   • dans laquelle $A_0$ est la partie continue des valeurs d'énergie de circuit intermédiaire et $A_{11}$ à $A_{22}$ sont d'autres paramètres du modèle d'oscillation, ainsi que $\omega$ est la pulsation d'un réseau de tension alternative relié au convertisseur (1).

6. Procédé suivant la revendication 4 ou 5,
   **caractérisé en ce que**

   • l'on utilise un modèle d'oscillation ayant des paramètres $A_0(t)$ à $A_{k2}(t)$, qui dépendent du temps.

**7.** Procédé suivant la revendication 6,
**caractérisé en ce que**

- • l'on donne à l'avance la variation en fonction du temps des paramètres par une fonction linéaire ou par une fonction exponentielle.

**8.** Procédé suivant la revendication 4 ou 5,
**caractérisé en ce que**

- • l'on utilise un modèle d'oscillation ayant des paramètres $A_0(t)$ à $A_{k2}$ constants dans le temps.

**9.** Procédé suivant l'une des revendications précédentes,
**caractérisé en ce que**

- l'unité (21) d'observation met à disposition, outre les valeurs $\hat{\underline{x}}(k)$ de courant-état non-retardées, des valeurs $\hat{\underline{y}}_d(k)$ initiales de modèle retardées, qui correspondent aux valeurs $\underline{y}_d(k)$ de mesure de sortie relevées à l'entrée de l'unité (21) d'observation, dans lequel

  - on compare les valeurs $\hat{\underline{y}}_d(k)$ de sortie de modèle aux valeurs $\underline{y}_d(k)$ de mesure de sortie détectées, en obtenant une différence d'écart de sortie de modèle, on envoie, du côté de l'entrée, la différence d'écart de sortie de modèle à l'unité (21) d'observation et on effectue la modélisation du convertisseur (1), de manière à rendre aussi petite que possible la différence d'écart de sortie de modèle.

**10.** Procédé suivant l'une des revendications précédentes,
**caractérisé en ce que**

- l'on envoie l'écart de valeurs de mesure de modèle à l'unité (21) d'observation par l'intermédiaire d'une unité (25) de retour, qui amplifie l'écart de valeurs de mesure de modèle.

**11.** Procédé suivant l'une des revendications précédentes,
**caractérisé en ce que**

- prendre en compte des effets de retard comprend la prise en compte de retards de mesure, qui se créent à la détection numérique des grandeurs d'état du convertisseur (1) et la prise en compte de retards de réglage, qui sont provoqués par l'électronique (19) de commande.

**12.** Procédé suivant la revendication 11,
**caractérisé en ce que**

- dans la détection des valeurs $\underline{y}_d(k)$ de mesure de sortie, on mesure les valeurs de courant du convertisseur (1), on échantillonne en continu le signal de mesure ainsi obtenu dans des stades d'échantillonnage, en obtenant des valeurs d'échantillonnage, et on numérise ensuite les valeurs d'échantillonnage, la modélisation des retards de mesure qui s'établissent s'effectuant dans l'unité (21) d'observation, en supposant que le retard de mesure corresponde à une durée de quatre stades d'échantillonnage.

**13.** Procédé suivant la revendication 11 ou 12,
**caractérisé en ce que**

- l'on modélise un retard $\tau$ de réglage suivant

$$\tau = (l-1) \cdot T + \tau'$$

dans laquelle $l$ est le nombre de plusieurs stades d'échantillonnage dont la somme est plus petite que le retard $\tau$ de réglage et $\tau'$ en tant que partie restante est plus courte que la durée entre deux stades $k$ d'échantillonnage.

**14.** Procédé suivant la revendication 13,
**caractérisé en ce que**

- *l* est égal à 2 ou 1.

**15.** Procédé suivant l'une des revendications précédentes, **caractérisé en ce que**

- l'on modélise le convertisseur (1) à l'aide d'un modèle d'espace d'état suivant

$$\hat{\underline{x}}'_{k+1} = \underline{\Phi}\hat{\underline{x}}'_k + \underline{\Gamma}u_k$$

$$\hat{\underline{y}}_d = \underline{H}\hat{\underline{x}}'_k$$

dans lesquelles $\hat{\underline{x}}'(k)$ est un vecteur d'état du convertisseur (1), y compris des états retardés, $\underline{u}_k$ est un vecteur des tensions de réglage, $\underline{\Phi}$, $\underline{\Gamma}$ et $\underline{H}$ sont des matrices de modèle et $\hat{\underline{y}}_d$ est un vecteur de valeurs de sortie de modèle d'état entachées de retard.

**16.** Procédé suivant l'une des revendications précédentes, **caractérisé en ce que**

- le convertisseur (1) est un convertisseur à plusieurs niveaux, qui a des branches (2) de soupape de semi-conducteurs de puissance reliées entre elles en un circuit en pont, dans lequel

- chaque branche (2) de soupape à semi-conducteurs de puissance est constituée d'un circuit série de sous-modules (8) bipolaires et chaque sous-module (8) comprend un circuit (9) de semi-conducteurs de puissance, ainsi qu'une unité (10) de condensateur montée en parallèle à celui-ci.

**17.** Agencement de régulation d'un convertisseur (1) par une unité (14, 16) de régulation, dans lequel

- l'unité (14, 16) de régulation est reliée, du côté de la sortie, à une entrée d'une unité (21) d'observation, qui représente un modèle du convertisseur et qui est raccordée par une autre entrée à la sortie du convertisseur (1), dans lequel, en outre,
- à la sortie du convertisseur (1), est raccordée une unité (21A) reproduisant le modèle de signal de valeur (*w*(*k*)) d'énergie de circuit intermédiaire et dans lequel
- l'unité (21) d'observation et l'unité (21A) d'estimation sont reliées du côté de la sortie à des entrées réelles de l'unité (14, 16) de régulation.

**18.** Agencement suivant la revendication 17,
**caractérisé en ce que**

- dans un convertisseur (1) ayant six branches (2) de soupape à semi-conducteurs de puissance, l'unité (21A) d'estimation a, pour chacune des trois branches (2) de soupape à semi-conducteurs de puissance du côté positif, respectivement un estimateur (33, 34, 35) et, pour chacune des trois branches (2) de soupape à semi-conducteurs de puissance du côté négatif, respectivement un autre estimateur (36, 37, 38).

**19.** Agencement suivant la revendication 17 ou 18,
**caractérisé en ce que**

- l'unité (21) d'observation a une unité (22) de modèle reproduisant le convertisseur (1), qui est reliée, par l'une de ses entrées, à la sortie de l'unité (14, 16) de régulation et, par son autre entrée, à la sortie d'une unité (25) de retour,
- l'unité (25) de retour est reliée, par la sortie, à un circuit (24) sommateur, qui est raccordé, par l'une de ses entrées, à la sortie du convertisseur (1) et, par l'autre entrée, à la sortie d'une unité (23) de sectionneur, l'unité (23) de sectionneur étant reliée à la sortie de l'unité (22) de modèle et
- la sortie de l'unité (22) de modèle est reliée à l'entrée de l'unité (14, 16) de régulation par une autre unité (26) de sectionneur.

FIG 1

## FIG 2

## FIG 3

## FIG 4

## FIG 5

FIG 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008067785 A1
- US 2004054440 A1
- WO 2008067784 A1
- DE 102009019298

**In der Beschreibung aufgeführte Nicht-Patentliteratur**

- Robust High Bandwidth Discrete-Time Predictive Current Control with Predictive Internal Model-A Unified Approach for Voltage-Source PWM Converters. **YASSER ABDEL-RADY IBRAHIM MOHAMED et al.** IEEE TRANSAC-TIONS ON POWER ELETRO-NICS. IEEE SERVICE CENTER, 01. Januar 2008, vol. 23, 126-136
- A modular multilevel PWM inverter for medium-voltage motor drives. **MAKOTO HAGIWARA et al.** EN-ERGY CONVERSION CONGRESS AND EXPO-SI-TION, 2009, ECCE, IEEE. IEEE, 20. September 2009, 2557-2564
- **DE LEON MORALES J et al.** *Observer for DC voltages in a cascaded H-bridge multilevel STATCOM,* 01. November 2007, vol. 1 (6), 879-889
- Optimization of the modular multilevel converters performance using the second harmonic of the module current. **ANDREJA RASIC et al.** 13TH EUROPEAN CONFERENCE ON POWER ELECTRONICS AND APPLICATIONS, 2009 : EPE '09. IEEE, 08. September 2009, 1-10
- On dynamics and voltage control of the Modular Multilevel Converter. **ANTONIOS ANTONOPOULOS et al.** 13TH EUROPEAN CONFERENCE ON POWER ELECTRONICS AND APPLICATIONS, 2009 : EPE '09. IEEE, 08. September 2009, 1-10